# EUROPEAN PATENT APPLICATION

(11) **EP 2 017 045 A2**
(43) Date of publication of application: **21.01.2009**
(21) Application number: 08252350.7
(22) Date of filing: 10.07.2008
(51) Int. Cl.: B27B 17/10

(54) **Chainsaw**

(30) Priority: 20.07.2007 GB 0714248
(71) Applicant: Husqvarna UK Limited, County Durham, DL5 6UP (GB)
(72) Inventor: Douglas, James Sturart, DL3 9JE (GB)
(74) Representative: Pratt, David Martin

(57) **Abstract**

A chainsaw (11) comprises a drive motor (16) in drivable engagement with a chain (13) via a motor output shaft (15) and a chain drive sprocket (12) associated with a final drive shaft (14). The motor output shaft (15) is in drivable engagement with the final drive shaft (14) via intermeshing drive and driven gear wheels (17 & 18) associated respectively with the motor output shaft and the final drive shaft. The driven gear wheel (18) is provided with an axial stub shaft (18a) extending therefrom towards the drive motor (16), and a wrap-spring clutch (19) is engageable with the stub shaft and the final drive shaft (14) to provide selective drive between the stub shaft and the final drive shaft.

## Description

This invention relates to a power-operated tool, and in particular to a portable, power-operated chainsaw.

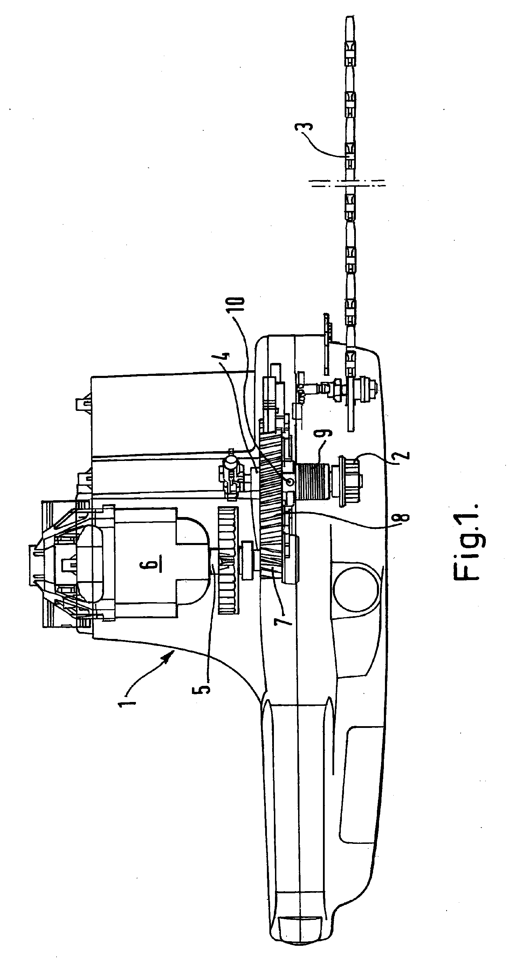

For reasons of safety, a chainsaw must meet a requirement to stop its chain in less than 0.15 seconds. This is usually achieved by using a brake and clutch mechanism that disengages the drive between the motor of the chainsaw and the chain, whilst simultaneously braking the chain. A known chainsaw 1 ( see Figure 1) includes a chain drive sprocket 2 which drivably engages a chain 3 of the chainsaw, the chain drive sprocket being carried by a final drive shaft 4. The final drive shaft 4 is driven by an output shaft 5 of a drive motor 6 via intermeshing drive and driven gear wheels 7 and 8 provided respectively on the motor output shaft and on the final drive shaft. This chainsaw 1 has a brake and clutch mechanism constituted by a wrap spring clutch 9 which surrounds the final drive shaft 4 and a stub shaft (not shown) formed integrally with the driven gear 8 adjacent to the chain drive sprocket 2.

In normal operation, power is transmitted from the motor 6 via its output shaft 5, the gears 7 and 8, the final drive shaft 4 and the chain drive sprocket 2 to the chain 3, owing to the clutching of the final drive shaft and the stub shaft of the driven gear 8 by the wrap-spring clutch 9 which firmly grips those two shafts. When drive to the chain 3 is to be interrupted, a pin 10 drops at the final coil of the spring 9, thereby uncoiling the spring slightly. The uncoiled spring 9 is thereby disengaged from the stub shaft of the driven gear 8 so that the gears 7 and 8 continue to rotate as the motor 6 decelerates, but continues to engage the final drive shaft 4, thereby to apply a braking force to that shaft, and hence to the chain drive sprocket 2 and the chain 3.

A disadvantage of this known chainsaw 1 is that, because the wrap-spring clutch 9 is positioned on the opposite side of the driven gear 8 to the drive motor 6, the housing which accommodates the driven gear and the chain drive sprocket 2 has a substantial width, which results in the chainsaw being bulky and costly to produce.

The present invention provides a chainsaw comprising a drive motor in drivable engagement with a chain via a motor output shaft and a chain drive sprocket associated with a final drive shaft, the motor output shaft being in drivable engagement with the final drive shaft via intermeshing drive and driven gear wheels associated respectively with the motor output shaft and the final drive shaft, wherein the driven gear wheel is provided with an axial stub shaft extending away from the drive sprocket, and a wrap-spring clutch is engageable with the stub shaft and the final drive shaft to provide selective drive between the stub shaft and the final drive shaft.

Preferably, the chainsaw further comprises a fan associated with the motor output shaft.

The wrap-spring clutch may be positioned adjacent to the fan.

Advantageously, the stub shaft is made of steel and the driven gear wheel is made of a plastics material, the stub shaft and the driven gear wheel being fixed together by moulding the driven gear over the stub shaft.

Preferably, the stub shaft is provided with features through which the plastics material of the driven gear flows, thereby to fix the stub shaft and the driven gear securely together.

The invention will now be described in greater detail, by way of example, with reference to the drawings, in which:
Figure 1 is a part-sectional side elevation of a known chainsaw;
Figure 2 is a part-sectional side elevation of a chainsaw constructed in accordance with the invention; and
Figure 3 is an enlarged sectional view of part of the chainsaw of Figure 2.

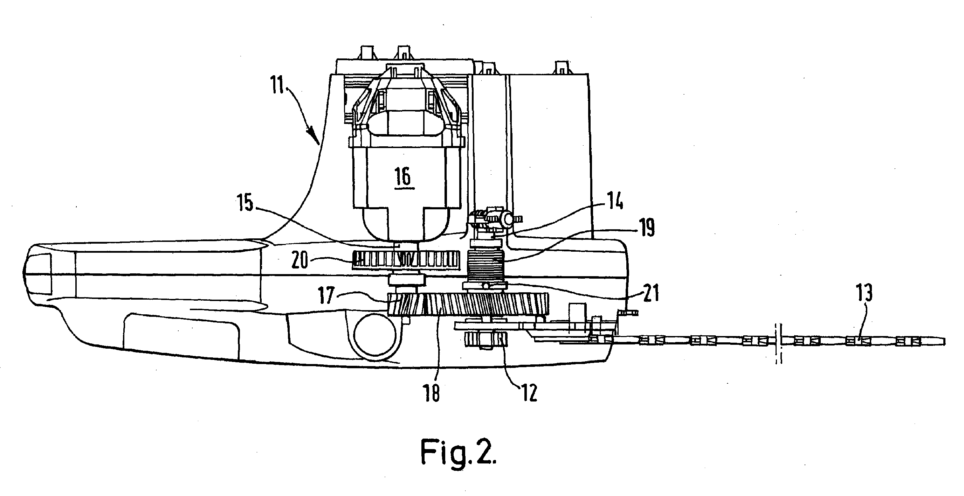

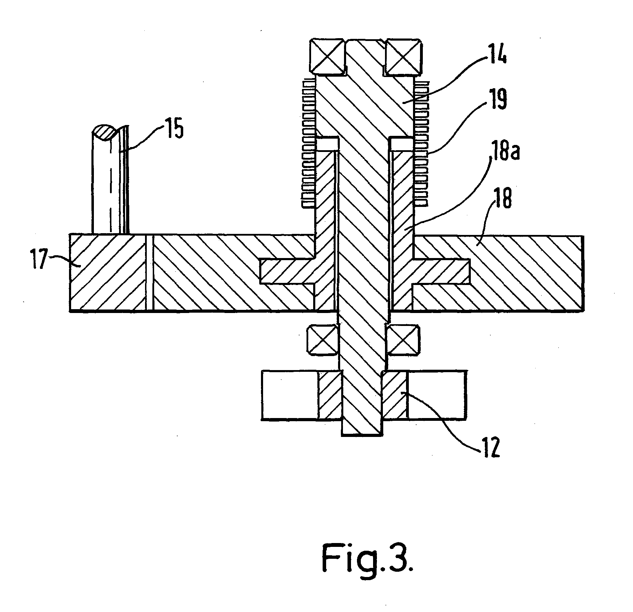

Referring to the drawings, Figure 2 shows a chainsaw 11 having a chain drive sprocket 12 which drivably engages a chain 13 of the chainsaw, the chain drive sprocket being carried by a final drive shaft 14. The final draft shaft 14 is driven by an output shaft 15 of a drive motor 16 via intermeshing drive and driven gear wheels 17 and 18 provided respectively on the motor output shaft and on the final drive shaft. The chainsaw 11 has a brake and clutch mechanism constituted by a wrap-spring clutch 19 which surrounds the final drive shaft 14 and a stub shaft 18a (see Figure 3) fixed to the driven gear 18 adjacent to a fan 20 provided on the output shaft 15 of the motor 16. The stub shaft 18a is made of steel, and the driven gear 18 is made of a plastics material such as PA6 nylon, these two parts being fixed together by moulding the driven gear over the stub shaft. The stub shaft 18a has features (not shown), through which the plastics material flows, thereby to fix the two parts securely together.

In normal operation, power is transmitted from the motor 16 via its output shaft 15, the gears 17 and 18, the final drive shaft 14 and the chain drive sprocket 12 to the chain 13, owing to the clutching of the final drive shaft and the stub shaft 18a of the driven gear 18 by the wrap-spring clutch 19 which firmly grips those two shafts. When drive to the chain 13 is to be interrupted, a pin 21 drops at the final coil of the spring 19, thereby uncoiling the spring slightly. The uncoiled spring 19 is thereby disengaged from the stub shaft 18a of the driven gear 18 so that the gears 17 and 18 continue to rotate as the motor 16 decelerates, but continues to engage the final drive shaft 14, thereby to apply a braking force to that shaft, and hence to the chain drive sprocket 12 and the chain 13.

By providing the wrap-spring clutch 19 on the drive motor side of the driven gear 18, the overall width of the chainsaw is reduced by approximately 32 mm, thereby producing a more compact machine. Not only is this chainsaw more compact than known chainsaws, but it is also easier to handle as the chainsaw itself is positioned nearer the centre of gravity of the machine.

## Claims

1. A chainsaw comprising a drive motor in drivable engagement with a chain via a motor output shaft and a chain drive sprocket associated with a final drive shaft, the motor output shaft being in drivable engagement with the final drive shaft via intermeshing drive and driven gear wheels associated respectively with the motor output shaft and the final drive shaft, wherein the driven gear wheel is provided with an axial stub shaft extending therefrom towards the drive motor, and a wrap-spring clutch is engageable with the stub shaft and the final drive shaft to provide selective drive between the stub shaft and the final drive shaft.

2. A chainsaw as claimed in claim 1, further comprising a fan associated with the motor output shaft.

3. A chainsaw as claimed in claim 2, wherein the wrap-spring clutch is positioned adjacent to the fan.

4. A chainsaw as claimed in any one of claims 1 to 3, wherein the stub shaft is made of steel and the driven gear wheel is made of a plastics material, the stub shaft and the driven gear wheel being fixed together by moulding the driven gear over the stub shaft.

5. A chainsaw as claimed in claim 4, wherein the stub shaft is provided with features through which the plastics material of the driven gear flows, thereby to fix the stub shaft and the driven gear securely together.
